# EUROPEAN PATENT APPLICATION

(11) **EP 4 488 922 A1**
(43) Date of publication of application: **08.01.2025**
(21) Application number: 23763173.4
(22) Date of filing: 03.02.2023
(51) Int. Cl.: G06Q 50/10, G06Q 30/0601

(54) **INFORMATION PROCESSING DEVICE, INFORMATION PROCESSING METHOD, AND INFORMATION PROCESSING PROGRAM**

(30) Priority: 04.03.2022 JP 2022033560
(71) Applicant: ZOZO, Inc., Chiba-shi, Chiba, 263-0023 (JP)
(72) Inventor: INUI, Utahiro, Chiba-shi, Chiba 263-0023 (JP); IETA, Tsuyoshi, Chiba-shi, Chiba 263-0023 (JP); ANDO, Fuminori, Chiba-shi, Chiba 263-0023 (JP); YOSHIOKA, Shunya, Chiba-shi, Chiba 263-0023 (JP); HORI, Miyuki, Chiba-shi, Chiba 263-0023 (JP)
(74) Representative: Hoffmann Eitle
(86) International application number: PCT/JP2023/003590
(87) International publication number: WO 2023/166911

(57) **Abstract**

Disclosed in an information processing apparatus (100) for promoting further improvement in usability for a user who refers to makeup on another person. The information processing apparatus (100) includes a generation unit (132) and a determination unit (135). The generation unit (132) generates, from a facial image of a poster who puts on predetermined makeup, makeup information for generating a facial image in which makeup similar to the predetermined makeup is applied to a facial image. The determination unit (135) determines a reward to be given to a poster who has posted the facial image from which the makeup information is generated according to a usage situation of a facial image in which the makeup information is applied to a facial image of a user.

## Description

### Field

The present invention relates to an information processing apparatus, an information processing method, and an information processing program.

### Background

When considering a purchase a cosmetic product (cosmetic), it is often to see makeup worn on a face of another person such as a model, but not be able to imagine what it would look like on oneself, and therefore not be able to know whether it would suit oneself or not.

Conventionally, there has been known a technique for assisting in applying makeup with reference to makeup on another person as a technique for responding to a desire to check whether makeup worn on another person's face suits oneself or not. For example, there has been known a technique for presenting makeup information of another person in association with areas of facial parts of a user.

### Citation List

### Patent Literature

Patent Literature 1: JP 5991536 B2

### Non Patent Literature

Non Patent Literature 1: W. Jiang, S. Liu, C. Gao, J. Cao, R. He, J. Feng, S. Yan "PSGAN: Pose and Expression Robust Spatial-Aware CAN for Customizable Makeup Transfer", [online], [searched on January 24, 2022], Internet <https://openaccess.thecvf.com/content_CVPR_2020/html/Jiang _PSGAN_Pose_and_Expression_Robust_Spatial-Aware_GAN_for_Customizable_Makeup_CVPR_2020_paper.html>

### Summary

### Technical Problem

However, in the conventional technique, for example, it is not possible to direct customers to a sales site that sells articles after allowing them to use a try-on function to check whether the articles used for makeup by another person suit themselves, or to promote active assistance by makeup posters in directing customers using performance-based rewards. Therefore, there is room for further improvement in usability for a user who refers to makeup on another person.

The present application has been made in view of the above, and an object thereof is to promote further improvement in usability for a user who refers to makeup on another person.

### Solution to Problem

An information processing apparatus according to the present disclosure includes: a generation unit that generates, from a facial image of a poster who puts on predetermined makeup, makeup information for generating a facial image in which makeup similar to the predetermined makeup is applied to a facial image; and a determination unit that determines a reward to be given to a poster who has posted the facial image from which the makeup information is generated according to a usage situation of a facial image in which the makeup information is applied to a facial image of a user.

### Advantageous Effects of Invention

As an effect of one aspect of the embodiment, it is possible to promote further improvement in usability for a user who refers to makeup on another person.

### Brief Description of Drawings

FIG. 1 is a diagram illustrating a configuration example of an information processing system according to an embodiment.
FIG. 2 is a diagram illustrating an example of information processing according to an embodiment.
FIG. 3 is an explanatory diagram for explaining information processing in a case where a priority of a facial image is set higher according to an embodiment.
FIG. 4 is a diagram illustrating a configuration example of a user terminal according to an embodiment.
FIG. 5 is a diagram illustrating a configuration example of a poster terminal according to an embodiment.
FIG. 6 is a diagram illustrating a configuration example of an information processing apparatus according to an embodiment.
FIG. 7 is a diagram illustrating an example of a poster information storage unit according to an embodiment.
FIG. 8 is a diagram illustrating an example of a cosmetic information storage unit according to an embodiment.
FIG. 9 is a flowchart illustrating an example of information processing according to an embodiment.
FIG. 10 is a hardware configuration diagram illustrating an example of a computer that realizes the functions of the information processing apparatus.

### Description of Embodiments

Hereinafter, modes (hereinafter referred to as "embodiments") for implementing an information processing apparatus, an information processing method, and an information processing program according to the present application will be described in detail with reference to the drawings. Note that the information processing apparatus, the information processing method, and the information processing program according to the present application are not limited by the embodiments. In the following embodiments, the same parts are denoted by the same reference numerals, and redundant description will be omitted.

### (Embodiment)

### [1. Configuration of Information Processing System]

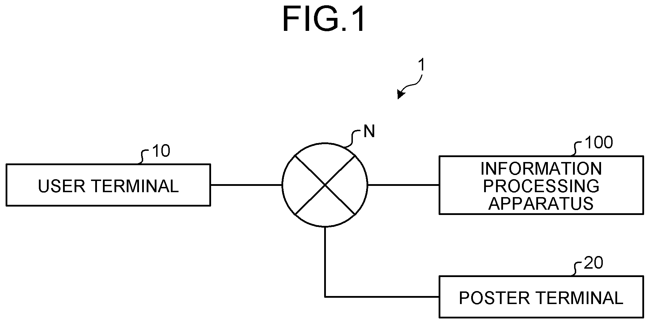

An information processing system 1 illustrated in FIG. 1 will be described. As illustrated in FIG. 1, the information processing system 1 includes a user terminal 10, a poster terminal 20, and an information processing apparatus 100. The user terminal 10, the poster terminal 20, and the information processing apparatus 100 are communicably connected to each other in a wired or wireless manner via a predetermined communication network (a network N). FIG. 1 is a diagram illustrating a configuration example of an information processing system 1 according to an embodiment.

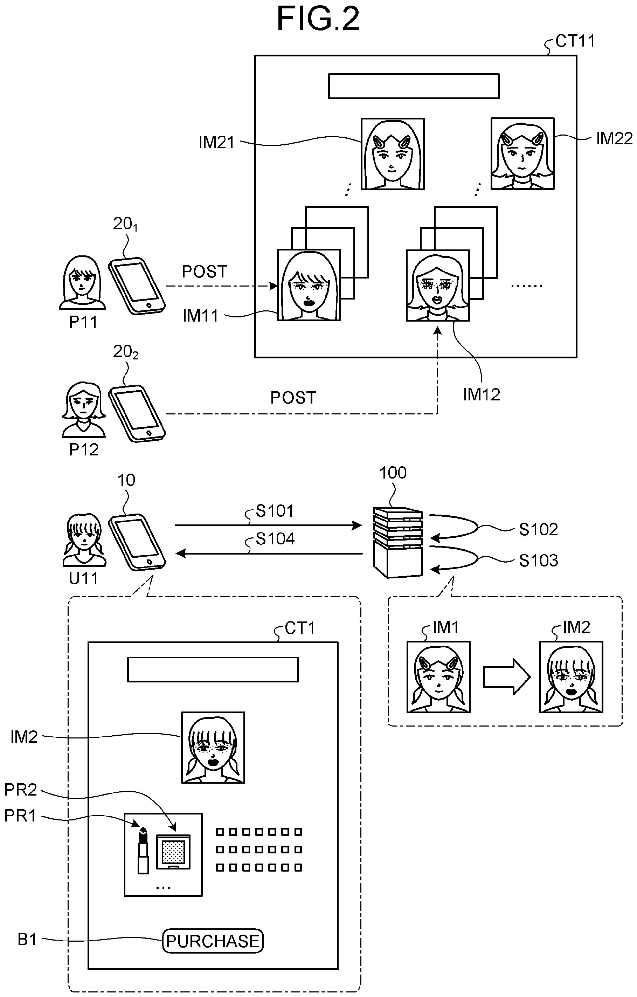

The user terminal 10 is an information processing apparatus used by a user who desires to check whether makeup worn on another person's face suits the user. Moreover, the user who uses the user terminal 10 is, for example, considering a purchase of a cosmetic. The user terminal 10 may be any device as long as the processing according to the embodiment can be realized. In addition, the user terminal 10 may be a device such as a smartphone, a tablet terminal, a notebook PC, a desktop PC, a mobile phone, or a PDA. In a case illustrated in FIG. 2, the user terminal 10 is a smartphone.

The user terminal 10 is, for example, a smart device such as a smartphone or a tablet, and is a portable terminal device capable of communicating with a certain server device via a wireless communication network such as any of third generation (3G) to fifth generation (5G) or long term evolution (LTE). In addition, the user terminal 10 may have a screen having a touch panel function, such as a liquid crystal display, to receive various operations, such as a tap operation, a slide operation, and a scroll operation, on displayed data such as content from the user, using a finger, a stylus, or the like. In FIG. 2, the user terminal 10 is used by a user U11.

The poster terminal 20 is an information processing apparatus used by a poster who provides a makeup facial image. Furthermore, the poster using the poster terminal 20 posts, for example, a facial image in which makeup is completed by applying the makeup from a pre-makeup bare face state. The poster terminal 20 may be any device as long as the processing according to the embodiment can be realized. In addition, the poster terminal 20 may be a device such as a smartphone, a tablet terminal, a notebook PC, a desktop PC, a mobile phone, or a PDA. In a case illustrated in FIG. 2, the poster terminal 20 is a smartphone.

The poster terminal 20 is, for example, a smart device such as a smartphone or a tablet, and is a portable terminal device capable of communicating with a certain server device via a wireless communication network such as any of 3G to 5G or LTE. Furthermore, the poster terminal 20 may have a screen having a touch panel function, such as a liquid crystal display, to receive various operations, such as a tap operation, a slide operation, and a scroll operation, on displayed data such as content from the poster, using a finger, a stylus, or the like. In FIG. 2, poster terminals 20 are used by a poster P11 and a poster P12. Note that a poster terminal 20₁ and a poster terminal 20₂ are poster terminals 20 of the poster P11 and the poster P12, respectively.

The information processing apparatus 100 is an information processing apparatus intended to promote further improvement in usability for a user who refers to makeup on another person, and may be any apparatus as long as the processing according to the embodiment can be realized. The information processing apparatus 100 is realized by, for example, a server device, a cloud system, or the like. For example, the information processing apparatus 100 is realized by a server device or a cloud system that provides a predetermined online shopping mall that sells cosmetics.

### [2. Example of Information Processing]

FIG. 2 is a diagram illustrating an example of information processing of the information processing system 1 according to the embodiment. In the following embodiment, a process for responding to a desire of the user U11 to check whether the makeup on the poster P11 suits the user will be described as an example.

For example, the information processing apparatus 100 acquires information on a facial image selected by the user U11 from among facial images posted by posters such as celebrities, so-called influencers, whose number of followers exceeds a predetermined threshold on a social networking service (SNS) (Step S101). Note that the facial images from which the user U11 can make a selection may include a plurality of facial images posted by one poster. In FIG. 2, the facial images from which the user U11 can make a selection include a facial image IM11 posted by the poster P11, a facial image IM12 posted by the poster P12, and the like. In the following description, it is assumed that the user U11 selects the facial image IM11 from content CT11. Note that facial images displayed in the content CT11 may be selected based on any criterion. For example, facial images posted by posters followed by the user U11 may be preferentially selected. Furthermore, the content CT11 is content on a predetermined service for managing facial images of posters.

The facial image IM11 is a facial image of the poster P11 after predetermined makeup. Note that a facial image IM21 is a facial image before makeup on the poster P11 with respect to the makeup in the facial image IM11. The facial image IM21 may be displayed in the content CT11 together with the facial image IM11, or may be displayed according to an operation (e.g., a click or a tap) or the like on the facial image IM11. In addition, the facial image IM21 may not be displayed to the user. As a result, since a poster does not need to show his/her bare face to the user, it is possible to promote improvement in usability for the poster. In addition, the facial image IM12 is a facial image of the poster P12 after predetermined makeup. Note that the facial image IM22 is a facial image before makeup on the poster P12 with respect to the makeup in the facial image IM12. The facial image IM22 may be displayed in the content CT11 together with the facial image IM12, or may be displayed according to an operation or the like on the facial image IM12. In addition, the facial image IM22 may not be displayed to the user.

Here, a method for generating makeup information may be, for example, a method of moving only makeup information from a facial image to another face disclosed in Non Patent Literature 1, which is called a pose and expression robust spatial-aware generative adversarial network (PSGAN) (Non Patent Literature 1). This technique is a technique using deep learning, and is capable of moving only makeup information to another face regardless of the expression or the pose. Using a method such as PSGAN, the information processing apparatus 100 generates makeup information for generating a facial image in which makeup similar to the makeup on the poster P11 used in the facial image IM11 selected by the user U11 is applied to a facial image (Step S102). Then, the information processing apparatus 100 applies the makeup information generated in Step S102 to a facial image IM1 of the user U11 by using a method such as PSGAN (Step S103). At this time, the facial image IM1 may be acquired in any way. For example, the facial image IM1 may be registered in advance by the user U11 and stored in an external information processing apparatus or in the information processing apparatus 100, or may be transmitted from the user terminal 10. In addition, the facial image IM1 may be selected as an application target by the user U11 or may be automatically selected as an application target. A facial image IM2 is a facial image after the makeup information is applied to the facial image IM1.

In Step S103, the information processing apparatus 100 transmits, to the user terminal 10, information for displaying content including the facial image IM2 of the user U11 to which the makeup information is applied and description content about cosmetics (corresponding to articles) used for makeup (Step S104). Then, the user terminal 10 displays content CT1 based on the information transmitted from the information processing apparatus 100.

Here, the content CT1 includes description content about cosmetics used for makeup by the poster P11 with respect to the facial image IM11. For example, the content CT1 includes information such as product names and prices of cosmetics. In a case illustrated in FIG. 2, two cosmetics PR1 and PR2, a lip product and a foundation, are included, but the number of cosmetics is not particularly limited. For example, the content CT1 may include description content about a set of cosmetics used by the poster P11 to transform a facial image IM21 in a pre-makeup state into a facial image IM11 in a predetermined post-makeup state. Further, the description content may include operation reception information B1 for receiving an operation for accessing a predetermined online shopping mall where a set of cosmetics used for makeup can be purchased. When an operation is received through the operation reception information B1, for example, a product page introducing the set of cosmetics may be accessed, or a purchase page containing the set of cosmetics in a cart may be accessed. Note that the operation reception information B1 may be integrated with the facial image IM2 or other content in the description content, and a product page or a purchase page may be accessed when an operation on the facial image IM2 or other content in the description content is received.

The information processing apparatus 100 determines whether the user U11 has purchased cosmetics associated with the description content. For example, the information processing apparatus 100 determines whether the user U11 has purchased all or some of the set of cosmetics including the cosmetics PR1 and PR2 in the predetermined online shopping mall accessed by operating the operation reception information B1. When it is determined that the user U11 has made a purchase, the information processing apparatus 100 determines to give a reward according to the purchase of the user U11 to the poster P11 who is a poster who has posted a facial image using makeup corresponding to the makeup information of the image IM2. Then, the information processing apparatus 100 performs processing for giving a reward according to the purchase of the user U11 to the poster P11. Note that the information processing apparatus 100 may determine to transmit information for the poster P11 to receive a reward according to the purchase of the user U11. In this case, the information processing apparatus 100 transmits information for the poster P11 to receive a reward according to the purchase of the user U11. Furthermore, the information processing apparatus 100 may determine to remit the reward to an account of the poster P11. In this case, the information processing apparatus 100 performs processing for remitting the reward to the account of the poster P11.

### (Variation 1 of Processing: Display Using Facial Image Before Makeup)

In the above-described embodiment, the case where a facial image after predetermined makeup, such as the facial image IM11 or the facial image IM12, is displayed in the content CT11 has been described, but the present invention is not limited to this example. For example, a facial image before pre-makeup such as facial image IM21 or facial image IM22 may be displayed in content CT11, and a facial image after predetermined makeup may be displayed by an operation on the facial image before pre-makeup. Then, the user U11 may view and select the facial image after makeup corresponding to the facial image before makeup, so that the information processing apparatus 100 generate makeup information to be applied to a facial image of the user.

### (Variation 2 of Processing: Display of Makeup Video)

In the above-described embodiment, the case where a facial image after predetermined makeup, such as the facial image IM11 or the facial image IM12, is displayed in the content CT11, and a facial image before makeup is displayed, for example, by operating the facial image after makeup has been described, but the present invention is not limited to this example. For example, by operating the facial image after makeup, a makeup video for makeup applied by the poster to transform the pre-makeup state into the post-makeup state may be displayed. Note that the makeup video includes, for example, a facial image before makeup such as the facial image IM21 or the facial image IM22, and a facial image after predetermined makeup such as the facial image IM11 or the facial image IM12. Furthermore, the makeup video may be displayed in content CT11 together with the facial image after makeup.

### (Variation 3 of Processing: Limitation of Facial Image Before Makeup)

In the above-described embodiment, the case where a facial image before makeup such as the facial image IM21 or the facial image IM22 is a facial image of a bare face of the poster has been described, but the present invention is not limited to this example. For example, the facial image before makeup such as the facial image IM21 or the facial image IM22 may be a facial image in which a certain degree of makeup is worn using a lip product, a foundation, or the like as long as it is a facial image before predetermined makeup such as the facial image IM11 or the facial image IM12. In this case, the information processing apparatus 100 may generate makeup information in which makeup information about cosmetics used in the facial image before makeup such as the facial image IM21 or the facial image IM22 is not to be applied to a facial image of the user, or is to be applied to a facial image of the user. Note that, since the facial image before makeup such as the facial image IM21 or the facial image IM22 is used for learning a skeleton in generating makeup information, appropriate makeup information can be generated even if the facial image before makeup is not a bare facial image. Therefore, the facial image of the poster before makeup may be registered only once, for example, on a predetermined service that manages facial images of posters. In addition, the description content about cosmetics used in the facial image before makeup such as the facial image IM21 or the facial image IM22 may not be included or may be included in the content CT1.

### (Variation 4 of Processing: Automatic Extraction of Article Information)

In the above-described embodiment, the cosmetics used for makeup by the poster P11 in the facial image IM11 may be, for example, specified in advance by image analysis from the facial image IM11 and the facial image IM21, and stored in an external information processing apparatus or the information processing apparatus 100 in association with the facial image IM11 and the facial image IM21. Furthermore, for example, the cosmetics used for makeup by the poster P11 in the facial image IM11 may be specified based on a history of cosmetic purchase in the predetermined online shopping mall by the poster P11 and stored in association with the facial image IM11 or the facial image IM21, or may be specified by a selection of the poster P11 from a list displayed as candidates based on a history of cosmetic purchase and stored in association with the facial image IM11 or the facial image IM21. In addition, the cosmetics used for makeup by the poster P11 in the facial image IM11 may be specified, for example, by receiving registration of cosmetics not sold in the predetermined online shopping mall from the poster P11, and stored in association with the facial image IM11 or the facial image IM21.

### (Variation 5 of Processing: Reflection of Order of Makeup)

In the above-described embodiment, the information processing apparatus 100 may generate makeup information reflecting an order of makeup by specifying the order of makeup put on by the poster P11 with respect to the facial image IM11. At this time, the information processing apparatus 100 may specify the order of makeup, for example, by receiving an input of the order of makeup from the poster P11, or, if there is a makeup video related to the facial image IM11, may specify the order of makeup from the makeup video. Furthermore, for example, the information processing apparatus 100 may specify the order of makeup by learning from a plurality of makeup videos. Furthermore, in the makeup video, since the information processing apparatus 100 can generate makeup information for each type of cosmetic, an applicable facial image may be selected. Further, the content CT1 may include description content reflecting the order of makeup. As a result, the information processing apparatus 100 can make an appropriate proposal including the order of makeup.

### (Variation 6 of Processing: Preferential Display 1 of Facial Image)

In the above-described embodiment, facial images to be displayed in the content CT1 may be selected based on any criterion, or may be displayed in any priority. For example, a facial image posted by a poster followed by the user U11 may be preferentially selected, or a facial image of a poster with a larger number of followers may be preferentially displayed. Furthermore, for example, a facial image may be preferentially selected or displayed based on face information or other body information of the user U11.

Here, examples of the face information include a shape, a size, and an arrangement of a part constituting a face, a color and a contour (shape) of the face, a color and a size of a pupil, and the like. The color of the face includes, for example, a complexion of a bare face. For example, the color of the face includes an average color of an entire measurement portion excluding lips, an average color of a forehead region, an average color of a region under a left eye, an average color of a region under a right eye, an average color of a left cheek region, an average color of a right cheek region, an average color of a nose region, an average color of an upper lip, an average color of a lower lip, an average color of a chin region, and the like. Furthermore, examples of the other body information other than the face information include, for example, hair (hairstyle, hair texture, hair color, decorative products, etc.), skin (skin color, skin texture, wrinkles, etc.), body shape (part size, overall balance), and the like.

In the above-described embodiment, a priority of a facial image of a poster who has more similar body information to the user U11 may be set higher so as to be preferentially selected or displayed. For example, the priority of the facial image of the poster may be set higher as the face information or the other body information other than the face information is the same as or more similar to that of the user U11. In addition, for example, the priority of the facial image of the poster may be set higher as the age, the skin age, or the skin affliction is the same as or more similar to that of the user U11. In addition, for example, the priority of the facial image of the poster may be set higher as the makeup concern is the same as or more similar to that of the user U11. In addition, for example, the priority of the facial image of the poster may be set higher as the hairstyle, the hair color, or the hair preference is the same as or more similar to that of the user U11. Furthermore, a priority of a facial image of a poster who has more different body information from the user U11 may be set lower so as not to be preferentially selected or displayed. For example, the priority of the facial image of the poster may be set lower as the balance between the parts of the face is more different from that of the user U11. In addition, for example, the priority of the facial image of the poster may be set lower as the contour of the face is more different from that of the user U11. In addition, for example, the priority of the facial image of the poster may be set lower as the complexion of the bare face is more different from that of the user U11.

Furthermore, a facial image may be preferentially selected or displayed based on an index indicating a degree of popularity of the facial image, such as an access history, a purchase history, or an evaluation history of a plurality of users with respect to the facial image. Specifically, a facial image may be preferentially selected or displayed based on a history of access to the facial image selected by a plurality of users, a history of purchase by a plurality of users by directing customers through content provided by selecting the facial image, a history of evaluation by a plurality of users at the time of applying makeup by selecting the facial image, a history of evaluation of the facial image or purchased cosmetics by a plurality of users after the purchase, and the like. For example, the priority of the facial image may be set higher as the index indicating the degree of popularity of the facial image, such as the history of access, purchase, or evaluation by a plurality of users with respect to the facial image, is higher. In addition, a facial image may be preferentially selected or displayed based on a total price of a set of cosmetics used for makeup by the poster. For example, the priority of the facial image may be set higher or lower as the total price of the set of cosmetics used for makeup by the poster is higher.

### (Variation 7 of Processing: Preferential Display 2 of Facial Image)

In the above-described embodiment, a facial image may be preferentially selected or displayed based on a history of cosmetic purchase by the user U11. For example, the priority of the facial image of the poster may be set higher as the handheld cosmetics are the same as or more similar to those of the user U11. For example, in a case where the purchase history of the user U11 includes cosmetics PR1, PR2, and PR3, a priority of a facial image of a poster whose purchase history includes more cosmetics among the cosmetics PR1, PR2, and PR3 may be set higher. For example, a priority of a facial image of a poster whose purchase history includes the cosmetics PR2 and PR3, among the cosmetics PR1, PR2, and PR3, may be set higher than a priority of a facial image of a poster whose purchase history includes only the cosmetic PR1. Furthermore, for example, the priority of the facial image may be set higher as the cosmetics are the same as or more similar to those held by the user U11. For example, in a case where the purchase history of the user U11 includes cosmetics PR1, PR2, and PR3, a priority of a facial image in which more cosmetics among the cosmetics PR1, PR2, and PR3 are used for makeup may be set higher.

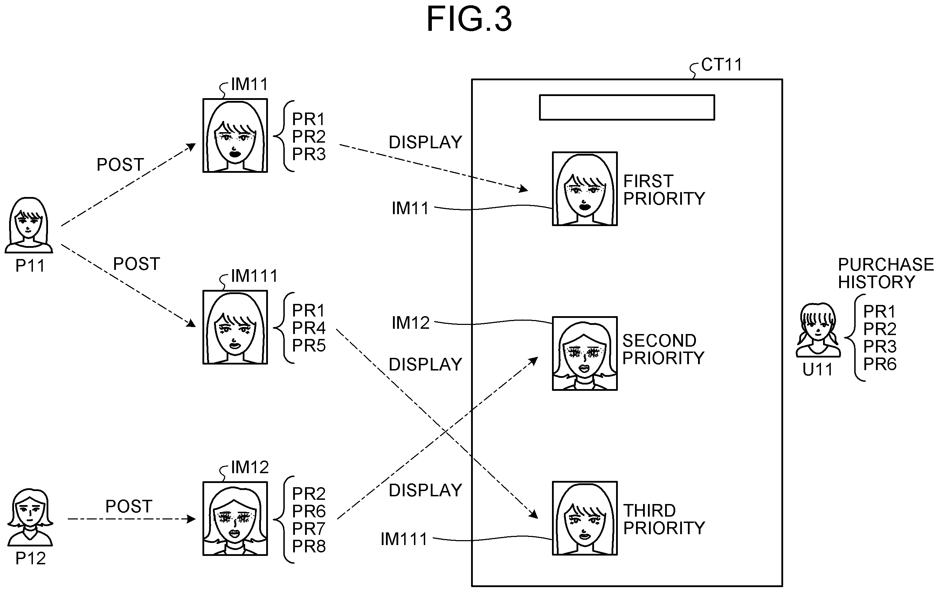

FIG. 3 is an explanatory diagram for explaining information processing in a case where a priority of a facial image is set higher as cosmetics in the facial image are the same as or more similar to the cosmetics held by the user U11 based on a history of cosmetic purchase by the user U11. The facial image IM11 and the facial image IM12 are facial images posted by the poster P11, and the facial image IM12 is a facial image posted by the poster P12. In addition, cosmetics used for makeup in the facial image IM11 are cosmetics PR1, PR2, and PR3, cosmetics used for makeup in the facial image IM111 are cosmetics PR1, PR4, and PR5, and cosmetics used for makeup in the facial image IM12 are cosmetics PR2, PR6, PR7, and PR8. In a case where the purchase history of the user U11 includes cosmetics PR1, PR2, PR3, and PR6, the facial image IM11 common to the cosmetics PR1, PR2, and PR3 is given a high priority, the facial image IM111 common to the cosmetics PR2 and PR6 is given a middle priority, and the facial image IM12 common to the cosmetics PR1 is given a low priority.

### (Variation 8 of Processing: Acquisition of Color Information)

In the above-described embodiment, the skin color such as the complexion may be, for example, measured by a measurement item such as ZOZOGLASS (registered trademark) that can be worn by the user U11 to perform measurements. By accurately measuring a skin color with corrected light, the accuracy of makeup information generated by the information processing apparatus 100 can be improved.

### [3. Configuration of User Terminal]

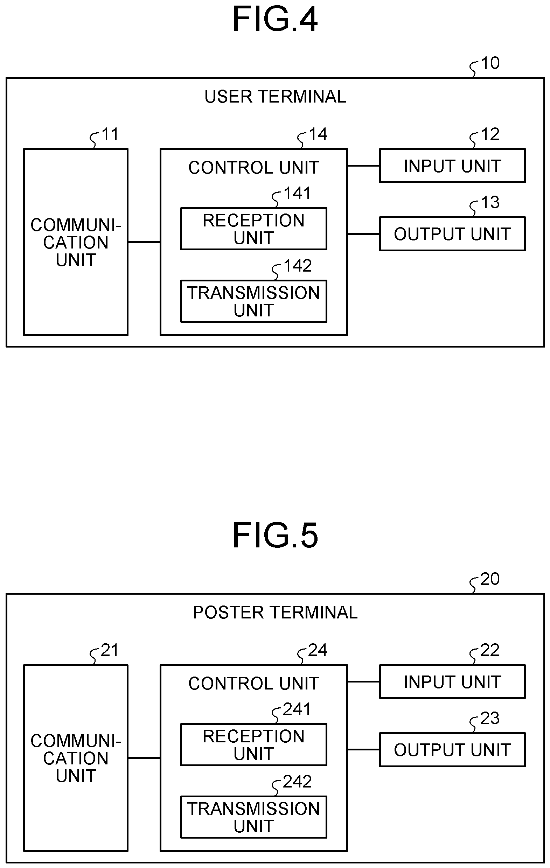

Next, a configuration of the user terminal 10 according to an embodiment will be described with reference to FIG. 4. FIG. 4 is a diagram illustrating a configuration example of the user terminal 10 according to an embodiment. As illustrated in FIG. 4, the user terminal 10 includes a communication unit 11, an input unit 12, an output unit 13, and a control unit 14.

### (Communication Unit 11)

The communication unit 11 is realized by, for example, a network interface card (NIC) or the like. Then, the communication unit 11 is connected to a predetermined network N in a wired or wireless manner, and transmits and acquires information to and from the information processing apparatus 100 and the like via the predetermined network N.

### (Input Unit 12)

The input unit 12 receives various operations from a user. In FIG. 2, various operations are received from the user U11. For example, the input unit 12 may receive various operations from the user via a display surface using a touch panel function. Furthermore, the input unit 12 may receive various operations from a button provided on the user terminal 10 or a keyboard or a mouse connected to the user terminal 10.

### (Output Unit 13)

The output unit 13 is a display screen of a tablet terminal or the like realized by, for example, a liquid crystal display, an organic electro-luminescence (EL) display, or the like, and is a display device for displaying various types of information. For example, the output unit 13 displays information transmitted from the information processing apparatus 100.

### (Control Unit 14)

The control unit 14 is, for example, a controller, and is realized by a central processing unit (CPU), a micro processing unit (MPU), or the like executing various programs stored in a storage device inside the user terminal 10 using a random access memory (RAM) as a work area. For example, the various programs include a program of an application installed in the user terminal 10. For example, the various programs include a program of an application for displaying content including a facial image transmitted from the information processing apparatus 100. Furthermore, the control unit 14 is realized by, for example, an integrated circuit such as an application specific integrated circuit (ASIC) or a field programmable gate array (FPGA).

As illustrated in FIG. 4, the control unit 14 includes a reception unit 141 and a transmission unit 142, and realizes or executes information processing operations to be described below.

### (Reception Unit 141)

The reception unit 141 receives various types of information from another information processing apparatus such as the information processing apparatus 100. For example, the reception unit 141 receives information for displaying content including a facial image of the user to which makeup similar to the makeup used by the poster in the facial image selected by the user is applied and description content about cosmetics used for the makeup.

### (Transmission Unit 142)

The transmission unit 142 transmits various types of information to another information processing apparatus such as the information processing apparatus 100. For example, the transmission unit 142 transmits information on the facial image selected by the user in order to check whether the makeup on the poster suits the user.

### [4. Configuration of Poster Terminal]

Next, a configuration of the poster terminal 20 according to an embodiment will be described with reference to FIG. 5. FIG. 5 is a diagram illustrating a configuration example of the poster terminal 20 according to an embodiment. As illustrated in FIG. 5, the poster terminal 20 includes a communication unit 21, an input unit 22, an output unit 23, and a control unit 24.

### (Communication Unit 21)

The communication unit 21 is realized by, for example, an NIC or the like. Then, the communication unit 21 is connected to a predetermined network N in a wired or wireless manner, and transmits and acquires information to and from the information processing apparatus 100 and the like via the predetermined network N.

### (Input Unit 22)

The input unit 22 receives various operations from a poster. In FIG. 2, various operations are received from the poster P11 and the poster P12. For example, the input unit 22 may receive various operations from the poster via a display surface using a touch panel function. Furthermore, the input unit 22 may receive various operations from a button provided on the poster terminal 20 or a keyboard or a mouse connected to the poster terminal 20.

### (Output Unit 23)

The output unit 23 is a display screen of a tablet terminal or the like realized by, for example, a liquid crystal display, an organic EL display, or the like, and is a display device for displaying various types of information. For example, the output unit 23 displays information transmitted from the information processing apparatus 100.

### (Control Unit 24)

The control unit 24 is, for example, a controller, and is realized by the CPU, the MPU, or the like executing various programs stored in a storage device inside the poster terminal 20 using a RAM as a work area. For example, the various programs include a program of an application installed in the poster terminal 20. For example, the various programs include a program of an application for transmitting a facial image of a poster according to an operation of the poster. Furthermore, the control unit 14 is realized by, for example, an integrated circuit such as an ASIC or an FPGA.

As illustrated in FIG. 5, the control unit 24 includes a reception unit 241 and a transmission unit 242, and realizes or executes processing operations to be described below.

### (Reception Unit 241)

The reception unit 241 receives various types of information from another information processing apparatus such as the information processing apparatus 100. For example, when a user who has viewed a facial image provided by a poster and applies makeup to his/her facial image purchases cosmetics corresponding to the applied makeup in a predetermined online shopping mall, the reception unit 241 receives information regarding a reward that can be received by the poster determined according to the purchase of the user. Note that the reception unit 241 may receive information for the poster to receive a reward according to the purchase of the user.

### (Transmission Unit 242)

The transmission unit 242 transmits various types of information to another information processing apparatus such as the information processing apparatus 100. For example, the transmission unit 142 transmits a facial image of the poster according to an operation of the poster.

### [5. Configuration of Information Processing Apparatus]

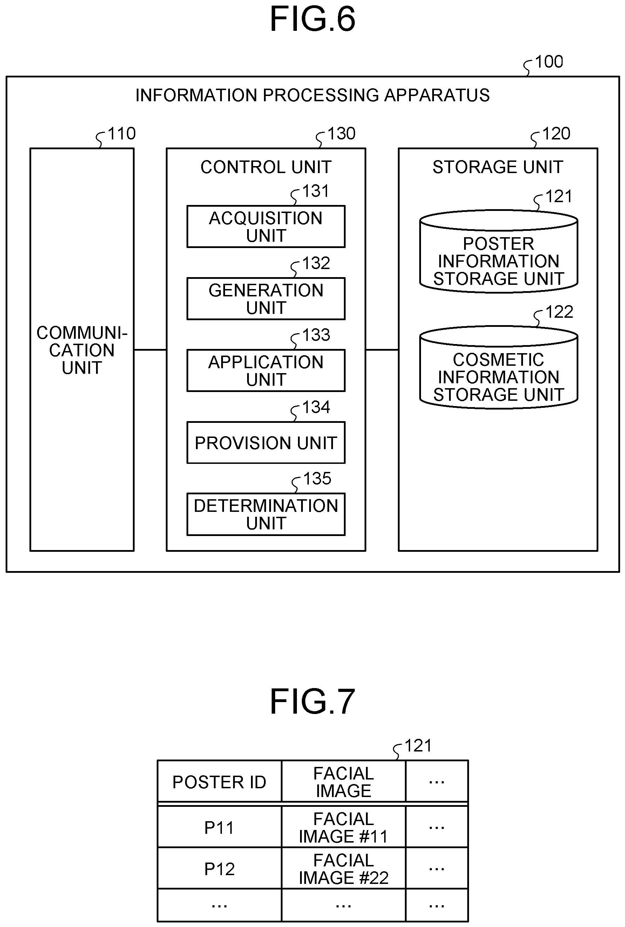

Next, a configuration of the information processing apparatus 100 according to an embodiment will be described with reference to FIG. 6. FIG. 6 is a diagram illustrating a configuration example of the information processing apparatus 100 according to an embodiment. As illustrated in FIG. 6, the information processing apparatus 100 includes a communication unit 110, a storage unit 120, and a control unit 130. Note that the information processing apparatus 100 may include an input unit (e.g., a keyboard, a mouse, or the like) that receives various operations from an administrator of the information processing apparatus 100, and a display unit (e.g., a liquid crystal display or the like) that displays various types of information.

### (Communication Unit 110)

The communication unit 110 is realized by, for example, an NIC or the like. Then, the communication unit 110 is connected to the network N in a wired or wireless manner, and transmits and acquires information to and from the user terminal 10 and the like via the network N.

### (Storage Unit 120)

The storage unit 120 is realized by, for example, a semiconductor memory element such as a RAM or a flash memory, or a storage device such as a hard disk or an optical disk. As illustrated in FIG. 6, the storage unit 120 includes a poster information storage unit 121 and a cosmetic information storage unit 122.

The poster information storage unit 121 stores facial images of posters. Here, FIG. 7 illustrates an example of the poster information storage unit 121 according to an embodiment. As illustrated in FIG. 7, the poster information storage unit 121 includes items such as "poster ID" and "facial image".

The "poster ID" indicates identification information for identifying a poster. The "facial image" indicates a facial image of a bare face of the poster registered by the poster at the time of first use or the like. In the example illustrated in FIG. 7, conceptual information such as "facial image #11" or "facial image #12" is stored as the "facial image", but image data or the like is actually stored. Furthermore, for example, a URL where image data is located, a file path name indicating a storage location, or the like may be stored as the "facial image".

That is, in the example illustrated in FIG. 7, the facial image of the bare face of the poster identified by the poster "P11" is "facial image #11".

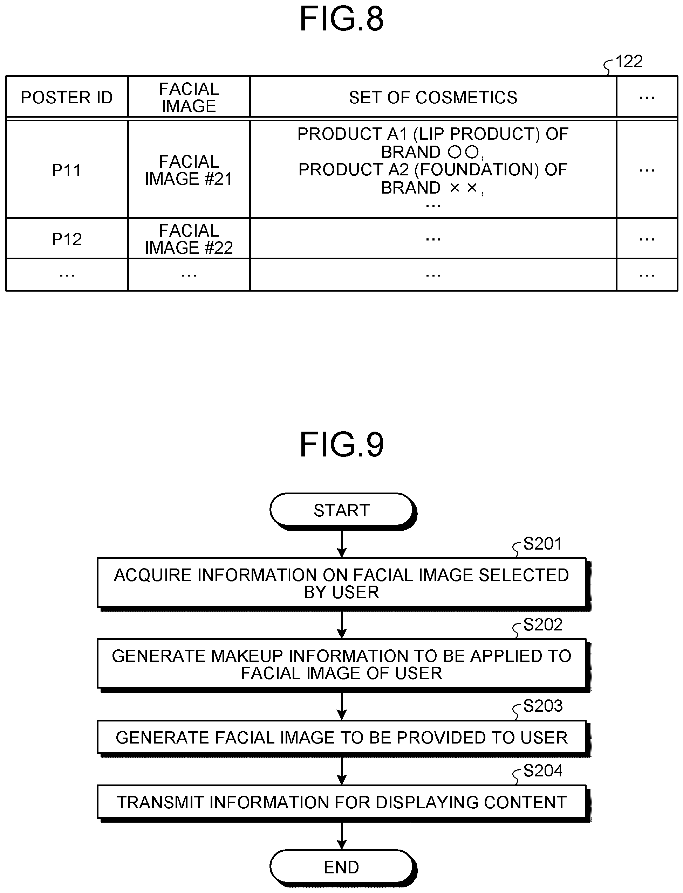

The cosmetic information storage unit 122 stores information on cosmetics used by the poster for makeup. As illustrated in FIG. 8, the cosmetic information storage unit 122 includes items such as "poster ID", "facial image", and "set of cosmetics".

The "poster ID" indicates identification information for identifying a poster. The "facial image" indicates a facial image posted by the poster. In the example illustrated in FIG. 8, conceptual information such as "facial image #21" or "facial image #22" is stored as "facial image", but image data or the like is actually stored. Furthermore, for example, a URL where image data is located, a file path name indicating a storage location, or the like may be stored as the "facial image". The "set of cosmetics" indicates a set of cosmetics used for makeup by the poster.

That is, FIG. 8 illustrates an example in which the facial image posted by the poster identified by the poster "P11" is "facial image #21", and the set of cosmetics used for makeup by the poster includes "product A1 (lip product) of brand oo, product A2 (foundation) of brand ××,...". The text in parentheses indicates the type of cosmetic.

### (Control Unit 130)

The control unit 130 is a controller, and is realized by, for example, a CPU, an MPU, or the like executing various programs stored in a storage device inside the information processing apparatus 100 using a RAM as a work area. Furthermore, the control unit 130 is a controller, and is realized by, for example, an integrated circuit such as an ASIC or an FPGA.

As illustrated in FIG. 6, the control unit 130 includes an acquisition unit 131, a generation unit 132, an application unit 133, a provision unit 134, and a determination unit 135, and realizes or executes processing operations to be described below. Note that the internal configuration of the control unit 130 is not limited to the configuration illustrated in FIG. 6, and may be another configuration as long as information processing to be described below is performed.

### (Acquisition Unit 131)

The acquisition unit 131 acquires various types of information from an external information processing apparatus. The acquisition unit 131 acquires various types of information from another information processing apparatus such as the user terminal 10.

The acquisition unit 131 acquires various types of information from the storage unit 120. In addition, the acquisition unit 131 stores the acquired various types of information in the storage unit 120.

The acquisition unit 131 acquires information on a facial image selected by the user from among facial images posted by posters on a predetermined service.

The acquisition unit 131 acquires information on cosmetics used for makeup by the poster with respect to the facial image selected by the user.

### (Generation Unit 132)

Based on the information acquired by the acquisition unit 131, the generation unit 132 generates makeup information for generating a facial image in which makeup similar to the makeup used by the poster in the facial image selected by the user is applied to a facial image, using a method such as PSGAN. In addition, in a case where the order of makeup put on by the poster with respect to the facial image selected by the user is specified, the generation unit 132 may generate makeup information reflecting the order of makeup.

The generation unit 132 generates information for displaying content including a facial image to which the makeup information is applied by the application unit 133 to be described below and description content about cosmetics specified based on the information acquired by the acquisition unit 131.

### (Application Unit 133)

The application unit 133 generates a facial image to be displayed on the user terminal 10 by applying the makeup information generated by the generation unit 132 to a facial image of the user selected as an application target.

The application unit 133 generates a facial image to be displayed on the user terminal 10 by applying makeup information generated from a facial image selected from among facial images preferentially selected or displayed with higher priorities each determined based on the face information, the body information, the cosmetic purchase history, or the like of the user.

The application unit 133 generates a facial image to be displayed on the user terminal 10 by applying makeup information generated from a facial image selected from among facial images preferentially selected or displayed with higher priorities each determined based on an index indicating a degree of popularity of the facial image such as an access history, a purchase history, or an evaluation history with respect to the facial image.

The application unit 133 generates a facial image to be displayed on the user terminal 10 by applying makeup information generated from a facial image selected from among facial images preferentially selected or displayed with higher priorities each determined based on a total price of the cosmetics used for makeup by the poster.

### (Provision Unit 134)

The provision unit 134 transmits information for displaying the content generated by the generation unit 132 to the user terminal 10. When receiving the information transmitted by the provision unit 134, the user terminal 10 displays content corresponding to the information generated by the generation unit 132.

### (Determination Unit 135)

The determination unit 135 determines whether the user has purchased the cosmetics associated with the content provided by the provision unit 134, and when it is determined that the user has purchased the cosmetics, the determination unit 135 determines that a reward according to the purchase of the user is given to the poster who has posted the facial image selected by the user. Then, the provision unit 134 performs processing for giving the reward according to the purchase of the user to the poster. Furthermore, the determination unit 135 may determine to transmit information for the poster to receive a reward according to the purchase of the user. In this case, the provision unit 134 transmits information for the poster to receive the reward according to the purchase of the user. Furthermore, the determination unit 135 may determine to remit the reward to an account of the poster. In this case, the provision unit 134 performs processing for remitting the reward to the account of the poster.

### [6. Flow of Information Processing]

Next, a procedure of information processing by the information processing system 1 according to an embodiment will be described with reference to FIG. 9. FIG. 9 is a flowchart illustrating a procedure of information processing by the information processing system 1 according to an embodiment.

As illustrated in FIG. 9, the information processing apparatus 100 acquires information on a facial image selected by the user from among facial images posted by posters on a predetermined service (Step S201).

Based on the acquired information, the information processing apparatus 100 generates makeup information for generating a facial image in which makeup similar to the makeup used by the poster in the facial image selected by the user is applied to a facial image (Step S202).

The information processing apparatus 100 generates a facial image to be provided to the user by applying the generated makeup information to a facial image of the user selected as an application target (Step S203).

The information processing apparatus 100 transmits information for displaying content including the generated facial image and description content about cosmetics used for makeup by the poster (Step S204).

### [7. Modification]

The information processing system 1 according to the above-described embodiment may be implemented in various different modes other than the above-described embodiment. Therefore, another embodiment of the information processing system 1 will be described below.

In the above-described embodiment, the case where the facial image of the user to which the makeup information is applied is displayed on the user terminal 10 has been described, but the present invention is not limited to this example. For example, the facial image of the user to which the makeup information is applied may be displayed on a terminal device of another person who communicates with the user online. For example, when the user selects a facial image of a poster in order for the user to participate in an online conference, makeup related to the selected facial image may be applied in a pseudo manner to the face of the user participating in the online conference, and a facial image to which the makeup related to the facial image selected by the user is applied may be displayed on a terminal device of another person. Then, when the user participates in the conference using the makeup on the poster, the user may be charged according to a usage situation such as a usage time or a usage frequency. Then, processing for giving some of the charge amount charged to the user to the poster as a reward may be performed. As a result, the user can participate in the conference in a bare face state, because the makeup face is displayed to another other person online.

In this case, the application unit 133 applies the makeup information generated by the generation unit 132 to a facial image of the user that is being captured in real time, thereby generating a facial image to be displayed on the terminal device of another person in real time. Using the facial image generated by the application unit 133, the generation unit 132 generates, in real time, information for displaying the facial image obtained by applying the makeup information to the facial image of the user on the terminal device of another person. By transmitting the information generated by the generation unit 132, the provision unit 134 distributes the facial image to which the makeup information is applied by the application unit 133 to another person who communicates with the user online in real time. The determination unit 135 determines a reward to be given to a poster who has posted the facial image selected by the user according to a usage situation (e.g., a usage time or a usage frequency) in which the facial image generated by the application unit 133 is used online. In other words, the determination unit 135 determines a reward to be given to a poster who has posted the facial image from which the makeup information is generated according to the usage situation of the facial image obtained by applying the makeup information to the facial image of the user. Note that the application and the like may be performed on a cloud of the user. In this case, the provision unit 134 may provide, for example, only the right to use the makeup information. Then, the user may exercise the provided right of use to display the facial image obtained by applying the makeup information to the facial image of the user on the terminal device of another person.

### [8. Effects]

As described above, the information processing apparatus 100 according to an embodiment includes a generation unit 132 and a determination unit 135. The generation unit 132 generates, from a facial image of a poster who puts on predetermined makeup, makeup information for generating a facial image in which makeup similar to the predetermined makeup is applied to a facial image. The determination unit 135 determines a reward to be given to a poster who has posted the facial image from which the makeup information is generated according to a usage situation of a facial image in which the makeup information is applied to a facial image of a user.

As a result, the information processing apparatus 100 according to the embodiment can appropriately respond to a desire of the user to participate in an online conference with a facial image in which makeup on another person is applied to the user.

In addition, the determination unit 135 determines the reward according to a usage time or a usage frequency in which the facial image in which the makeup information is applied to the facial image of the user is used by the user.

As a result, the information processing apparatus 100 according to the embodiment can appropriately motivate a poster to post a facial image.

Furthermore, the application unit 133 applies the makeup information generated from the facial image selected from among the facial images preferentially selected or displayed based on a predetermined criterion.

As a result, the information processing apparatus 100 according to the embodiment can provide appropriate information to the user based on the predetermined criteria, thereby more appropriately responding to a desire of the user.

In addition, the application unit 133 applies the makeup information generated from the facial image selected from among the facial images preferentially selected or displayed with higher priorities each determined based on at least one of face information, body information, or an article purchase history of the user.

As a result, the information processing apparatus 100 according to the embodiment can provide appropriate information to the user based on the face information, the body information, the article purchase history, or the like, thereby more appropriately responding to a desire of the user.

Furthermore, the application unit 133 applies the makeup information generated from the facial image selected from among the facial images preferentially selected or displayed with higher priorities each determined based on at least one of an access history, a purchase history, or an evaluation history with respect to the facial image.

As a result, the information processing apparatus 100 according to the embodiment can provide appropriate information to the user based on the access history, the purchase history, the evaluation history, or the like with respect to the facial image, thereby more appropriately responding to a desire of the user.

In addition, the application unit 133 applies the makeup information generated from the facial image selected from among the facial images preferentially selected or displayed with higher priorities each determined based on a total price of articles.

As a result, the information processing apparatus 100 according to the embodiment can provide appropriate information to the user based on the total price of articles, thereby more appropriately responding to a desire of the user.

### [9. Hardware Configuration]

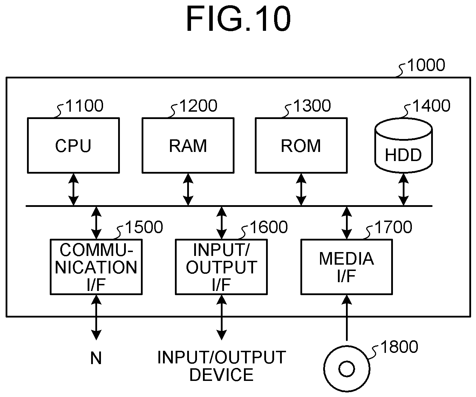

Furthermore, the user terminal 10, the poster terminal 20, and the information processing apparatus 100 according to the above-described embodiments are realized by, for example, a computer 1000 having a configuration as illustrated in FIG. 10. FIG. 10 is a hardware configuration diagram illustrating an example of a computer that realizes the functions of the user terminal 10, the poster terminal 20, and the information processing apparatus 100. The computer 1000 includes a CPU 1100, a RAM 1200, a ROM 1300, an HDD 1400, a communication interface (I/F) 1500, an input/output interface (I/F) 1600, and a media interface (I/F) 1700.

The CPU 1100 operates based on a program stored in the ROM 1300 or the HDD 1400, and controls each unit. The ROM 1300 stores a boot program executed by the CPU 1100 when the computer 1000 is started, a program depending on the hardware of the computer 1000, and the like.

The HDD 1400 stores a program executed by the CPU 1100, data used by the program, and the like. The communication interface 1500 acquires data from another device via a predetermined communication network, sends the acquired data to the CPU 1100, and transmits data generated by the CPU 1100 to another device via the predetermined communication network.

The CPU 1100 controls an output device such as a display or a printer and an input device such as a keyboard or a mouse via the input/output interface 1600. The CPU 1100 acquires data from the input device via the input/output interface 1600. In addition, the CPU 1100 outputs generated data to the output device via the input/output interface 1600.

The media interface 1700 reads a program or data stored in a recording medium 1800 and provides the read program or data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the user terminal 10, the poster terminal 20, and the information processing apparatus 100 according to the embodiments, the CPU 1100 of the computer 1000 realizes the functions of the control units 14, 24, and 130 by executing programs loaded onto the R_AM 1200. The CPU 1100 of the computer 1000 reads these programs from the recording medium 1800 for execution, but as another example, these programs may be acquired from another device via a predetermined communication network.

### [10. Others]

Among the processes described in the above-described embodiments, all or some of the processes described as being automatically performed can be manually performed, or all or some of the processes described as being manually performed can be automatically performed by a known method. In addition, the processing procedures, the specific names, and the information including various types of data and parameters described hereinabove and illustrated in the drawings can be arbitrarily changed unless otherwise specified. For example, the various types of information illustrated in each drawing are not limited to the illustrated information.

In addition, each component of each device illustrated in the drawings is functionally conceptual, and is not necessarily physically configured as illustrated in the drawings. That is, a specific distributed or integrated form of each device is not limited to the illustrated form, and all or part of each device can be functionally or physically distributed or integrated in a certain unit according to various loads, usage situations, and the like.

In addition, the above-described embodiments can be appropriately combined within a range in which the processing contents do not contradict each other.

Although several embodiments of the present application have been described in detail with reference to the drawings, they are merely exemplary, and the present invention can be implemented in other forms subjected to various modifications and improvements based on the knowledge of those skilled in the art, including the aspects described in the disclosure of the invention.

In addition, the above-mentioned "section, module, or unit" can be replaced with "means", "circuit", or the like. For example, the acquisition unit can be replaced with an acquisition means or an acquisition circuit.

### Reference Signs List

1 INFORMATION PROCESSING SYSTEM
10 USER TERMINAL
11 COMMUNICATION UNIT
12 INPUT UNIT
13 OUTPUT UNIT
14 CONTROL UNIT
20 POSTER TERMINAL
21 COMMUNICATION UNIT
22 INPUT UNIT
23 OUTPUT UNIT
24 CONTROL UNIT
100 INFORMATION PROCESSING APPARATUS
110 COMMUNICATION UNIT
120 STORAGE UNIT
121 POSTER INFORMATION STORAGE UNIT
122 COSMETIC INFORMATION STORAGE UNIT
130 CONTROL UNIT
131 ACQUISITION UNIT
132 GENERATION UNIT
133 APPLICATION UNIT
134 PROVISION UNIT
135 DETERMINATION UNIT
141 RECEPTION UNIT
142 TRANSMISSION UNIT
241 RECEPTION UNIT
242 TRANSMISSION UNIT
N NETWORK

## Claims

1. An information processing apparatus including:
a generation unit that generates, from a facial image of a poster who puts on predetermined makeup, makeup information for generating a facial image in which makeup similar to the predetermined makeup is applied to a facial image; and
a determination unit that determines a reward to be given to a poster who has posted the facial image from which the makeup information is generated according to a usage situation of a facial image in which the makeup information is applied to a facial image of a user.

2. The information processing apparatus according to claim 1, wherein
the determination unit
determines the reward according to a usage time or a usage frequency in which the facial image in which the makeup information is applied to the facial image of the user is used by the user.

3. The information processing apparatus according to claim 1 or 2, further including
an application unit that applies, to the facial image of the user, makeup information generated from a facial image selected by the user from among facial images posted by posters satisfying a predetermined condition.

4. The information processing apparatus according to claim 3, wherein
the application unit
applies the makeup information generated from the facial image selected from among the facial images preferentially selected or displayed based on a predetermined criterion.

5. The information processing apparatus according to claim 4, wherein
the application unit
applies the makeup information generated from the facial image selected from among the facial images preferentially selected or displayed with higher priorities each determined based on at least one of face information, body information, or an article purchase history of the user.

6. The information processing apparatus according to claim 4, wherein
the application unit
applies the makeup information generated from the facial image selected from among the facial images preferentially selected or displayed with higher priorities each determined based on at least one of an access history, a purchase history, or an evaluation history with respect to the facial image.

7. The information processing apparatus according to claim 4, wherein
the application unit
applies the makeup information generated from the facial image selected from among the facial images preferentially selected or displayed with higher priorities each determined based on a total price of articles.

8. An information processing method executed by a computer, the information processing method including:
a generation step of generating, from a facial image of a poster who puts on predetermined makeup, makeup information for generating a facial image in which makeup similar to the predetermined makeup is applied to a facial image; and
a determination step of determining a reward to be given to a poster who has posted the facial image from which the makeup information is generated according to a usage situation of a facial image in which the makeup information is applied to a facial image of a user.

9. An information processing program for causing a computer to execute:
a generation procedure of generating, from a facial image of a poster who puts on predetermined makeup, makeup information for generating a facial image in which makeup similar to the predetermined makeup is applied to a facial image; and
a determination procedure of determining a reward to be given to a poster who has posted the facial image from which the makeup information is generated according to a usage situation of a facial image in which the makeup information is applied to a facial image of a user.
